# EUROPEAN PATENT SPECIFICATION

(11) **EP 0 318 063 B1**
(45) Date of publication and mention of the grant of the patent: **16.06.1993**
(21) Application number: 88200431.0
(22) Date of filing: 08.03.1988
(51) Int. Cl.: H02K 15/095

(54) **Equipment for the actuation of needles for the realization of electric motors field windings**
Betätigungsgerät für Legenadeln zur Herstellung von Feldwindungen elektrischer Motoren
Dispositif de mise en action des tubes de guidage pour la fabrication de bobinages de champ pour moteurs électriques

(30) Priority: 26.11.1987 IT 6800987
(43) Date of publication of application: 31.05.1989
(60) Divisional application: 92119069.0
(73) Proprietor: AXIS S.p.A., I-50028 Tavarnelle Val di Pesa (Firenze) (IT)
(72) Inventor: Luciani, Sabatino, Firenze (IT); Lumini, Antonio, Sesto Fiorentino FI (IT)
(74) Representative: Lotti, Giorgio

(56) References cited:
- EP-A- 0 209 624
- US-A- 3 025 008
- US-A- 3 903 593

## Description

The invention refers to an equipment for the actuation of needles for the realization of electric motors field windings.

The invention refers in particular to a variable stroke kinematic device which drives the reciprocating motion of a hollow shaft traversed by winding wire. The hollow shaft carries a concentric tube which drives the needle holder heads; these wind the wire into the stator slots.

Machines for forming stator windings are known in which a needle, driven with rectilinear reciprocating motion combined with reciprocating rotary motion about its axis, carries at least one copper wire unwinding from a reel in order to deposit it into the stator slots. The needle comprises one point if a single winding is to be made, or comprises two opposing points if both windings are to be made simultaneously. In all cases, the needle always has its axis of advancement and rotation coinciding with the stator axis in order to enable it to slide in the open spaces between the slots within the stator during its to-and-fro movement and to lie equidistant from all the stator slots into which its points are to wind the copper wire.

U.S. Patent 3,025,008 shows an apparatus for alternately reciprocating and oscillating a group of tour wire dispensing needles. The four needles move together as a unit. The length of the oscillation stroke is adjustable based on the insertion of one of a series of pivot pins in a lever member.

U.S. Patent 3,903,593 shows an apparatus for alternately reciprocating and oscillating winding needles. The length of the oscillation stroke is adjustable, depending on the location of a shaft along an oscillating member.

In the two above apparatus winding forms, also known as shoes, are applied to the ends of the respective slots, and are shaped in such a manner as to accompany the copper wire of the needle into the slot, when the needle rotates external to the stator.

In its italian patent applications No. 20184-A/85 of 2nd April 1985 and No. 21485A/85 of 9th July 1985, the Applicant describes two different embodiments of the wire delivering needles by means of which the field windings may be made without employing the traditional shoes.

The first application No. 20184-A/85 describes a winding needle animated by straight-line reciprocating motion combined with reciprocating rotatory motion around its own axis, where the needle is eccentric with respect to the centre of the stator and finds itself at such a distance, along the axis of symmetry of the slots to which it is adjacent, that the height of the point of the needle, calculated as a distance between its end and the axis, is equal or grater than the distance between the axis of the needle and the end of the front retaining tooth of the winding in the slots.

The second application No. 21485-A/85 describes a winding needle animated by straight-line reciprocating combined with reciprocating rotatory motion around its own axis where the end points of the needle are split and oscillate between a maximum approach position in which the distance between them is smaller than the maximum size of the internal opening of the stator and a maximum straddle position, in which the ends of the points are at a greater distance than the one between the ends of the teeth for retaining the windings in the opposed slots of the stator.

In both cases the needles must perform complex traverse and reciprocating rotatory motion with the purpose of obtaining a field winding machine which allows for the elimination of winding forms or shoes and consequently of the devices for fixing and clearing them from the stator.

By eliminating the form or shoes, these solution offer a second advantage, which is to improve the winding formed around each slot, by reducing the stroke of the needle and the loop formed by the wire externally to the stator.

Purpose of the invention is to propose a kinematic device able to actuate alternatively both the above mentioned types of needles by substituting the needle holder heads relating to the end of the kinematic device.

For these and further purposes that will be better understood in the description which follows, the invention proposes to realize a machine for the actuation of the needles for the realization of electric motor field windings comprising a casing and needles which accomplish longitudinal reciprocatory motion and oscillatory motion for delivering wire to form the coils; characterised in that it further comprises: a shaft having a longitudinal axis and being mounted for longitudinal reciprocation relative to said casing parallel to said longitudinal axis; a tube mounted for longitudinal reciprocation with said shaft; reciprocating means for causing the shaft and the tube to reciprocate longitudinally oscillating means for obtaining rotational oscillation between the shaft and the tube; connecting means for connecting first and second needles to the tube and the shaft and for causing the first and second needles to reciprocate longitudinally in response to the longitudinal reciprocation of the shaft and to move relative to one another in response to the rotational oscillation between the tube and the shaft.

A description of the machine follows and reference must be made to the enclosed drawings:
- Fig. 1: is a sectional view of the machine according to the invention;
- Fig. 2 and 3: are sectional views respectively according to outlines II-III of Fig. 1;
- Fig. 4: is the perspective view of the casing which contains the machine according to the invention;
- Fig. 5 and 6: are sectional views according to outline V-V of Fig. 1 in different operating conditions of the illustrated unit;
- Fig. 7: is the axial view of the needle holder unit as the first realization of the invention;
- Fig. 7a: is the perspective view of a particular of Fig. 7;
- Fig. 8: is the perspective view of a stator in which the needle holder unit illustrated in Fig. 7 operates;
- Fig. 9: is the axial section of the needle holder unit as the second realization of the invention;
- Fig. 10: is the enlarged view of a particular of the unit illustrated in Fig. 9;
- Fig. 11: is the view according to arrow A of Fig. 9.

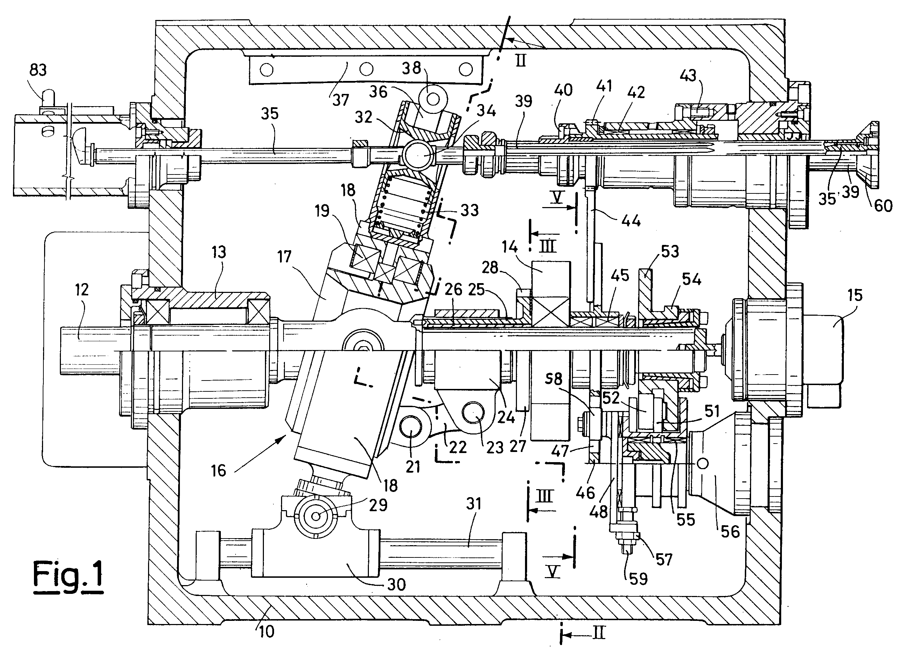

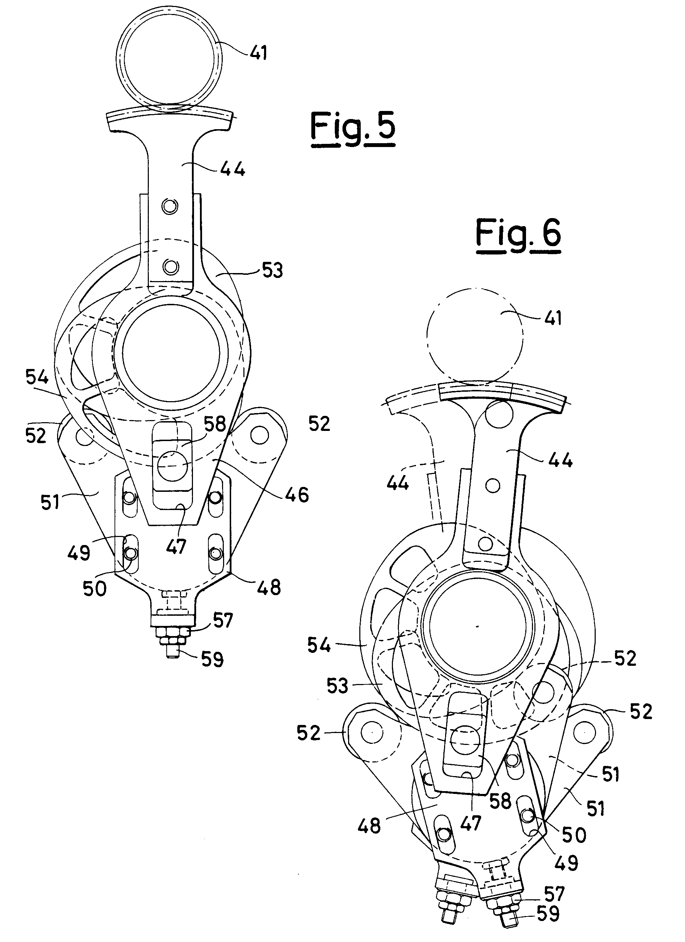

According to the invention the machine is enclosed in a casing 10 (figures 1 and 4) on which an electric motor 11 is assembled, advantageously direct current operated and of the type without brushes, which by means of a belt 9, acts directly on a main shaft 12. The latter is assembled on supports 13 and 14 of the casing and its position during rotation is controlled by an encoder 15 placed on the end of the main shaft 12 opposed to the one connected to motor 11 (see Fig. 1).

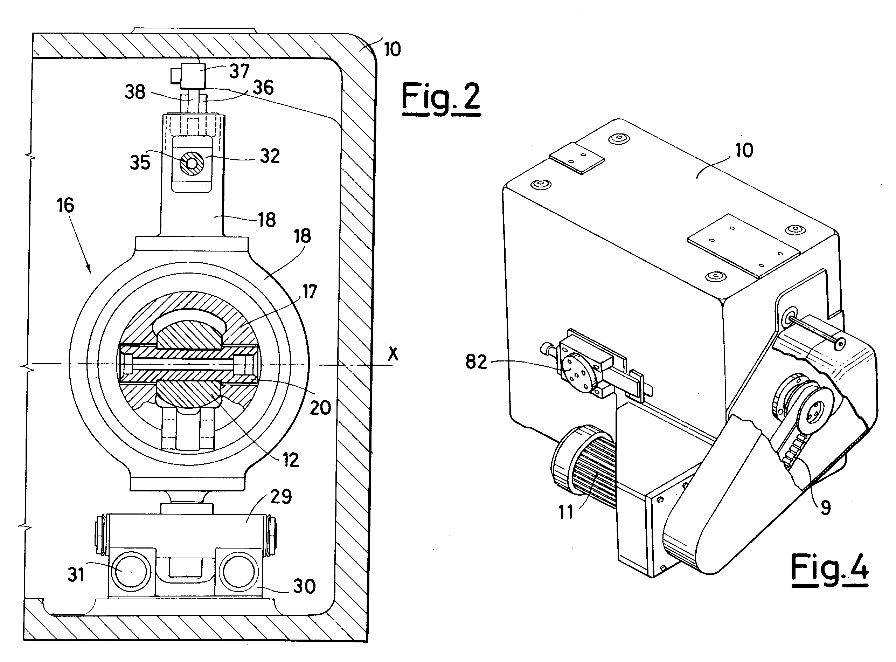

On the shaft 12 a disk assembly 16 is assembled (Figures 1, 2, 3) which holds a disk 17 assembled in rotating mode in a frame 18 by means of bearings 19. The disk 17 is assembled in oscillating mode on the main shaft 12 by pins 20 traversely placed with respect to the axis of same shaft 12 so that the disk assembly, 16 may oscillate on the shaft 12 around x axis of pins 20.

To the disk 17 is pivoted in 21 connecting rod 22 which is also pivoted in 23 on a sleeve 24. The latter, internally threaded, is screwed on the external thread of a coupling sleeve 25 which is assembled on the shaft 12 by bushing 26 and equipped with flange 27 in which a notch 28 is machined.

The frame 18 in the lower part is pivoted in 29 on bushings 30 sliding along guides 31 which are integral with case 10.

In the upper part, the frame 18 is box-type and seats internally a slideable cursor 32 which is thrusted towards the exterior by a spring 33. Cursor 32 is hinged to a circular portion 34 integral to the winding shaft 35, to which the reciprocating motion of the disk is transmitted, and it holds a roller, assembled on the end 36 of the cursor 32, sliding on a longitudinal race 37 which is integral to the casing 10; in this way centrifugal stresses of the cursor 32 are avoided on the shaft 35 as the race 37 takes up the loads of the cursor 32.

The winding shaft 35 is hollow and the cables appointed for the realization of the field windings slide into it.

On the shaft 35 an externally splined tube 39 concentric to it is inserted; a sleeve 40, internally splined is assembled on the shaft 39 and holds a pinion 41 integral to it, assembled by means of bearings 42 on an external support 43 secured to the casing 10.

The pinion 41 is set in rotation by a sector gear 44 assembled neutrally on main shaft 12, by means of bearing 45, and holding, on the other side with respect to shaft 12, a tailpiece 46 equipped with a slot 47 (Figures 1, 5 and 6).

A cursor 58 slides in the slot 47, integral to a slotted link 48 equipped with slots 49 in which pins 50 of a crank V-shaped plate 51 can slide. To the ends of the plate 51 rollers 52 are hinged and on each of them acts the surface of two coupled cams 53 and 54.

The V-shaped plate 51 is assembled on bearings 55 of a support 56, while the coupled cams 53 and 54 are keyed on the main shaft 12.

Through cams 53 and 54 rotating shaft 12 action can be made on rollers 52 thereby making crank V-shaped element 51 oscillate together with slotted link 48 and also of the tailpiece 46 integral to the sector gear 44 which makes gear 41 rotate. By means of the latter, integral to the sleeve 40, the rotation of tube 39 can be obtained.

It is sufficient to loosen the nut 57 and to rotate the screw 59, moving upward or downward the position of slotted link 48 and then of its cursor 58 in the slot 47, in order to vary the amplitude of the oscillation of the tube 39.

To the end of the rotating tube 39 a flange 60 is applied which transmits the rotatory motion to the winding needles integral to reciprocating shaft 35.

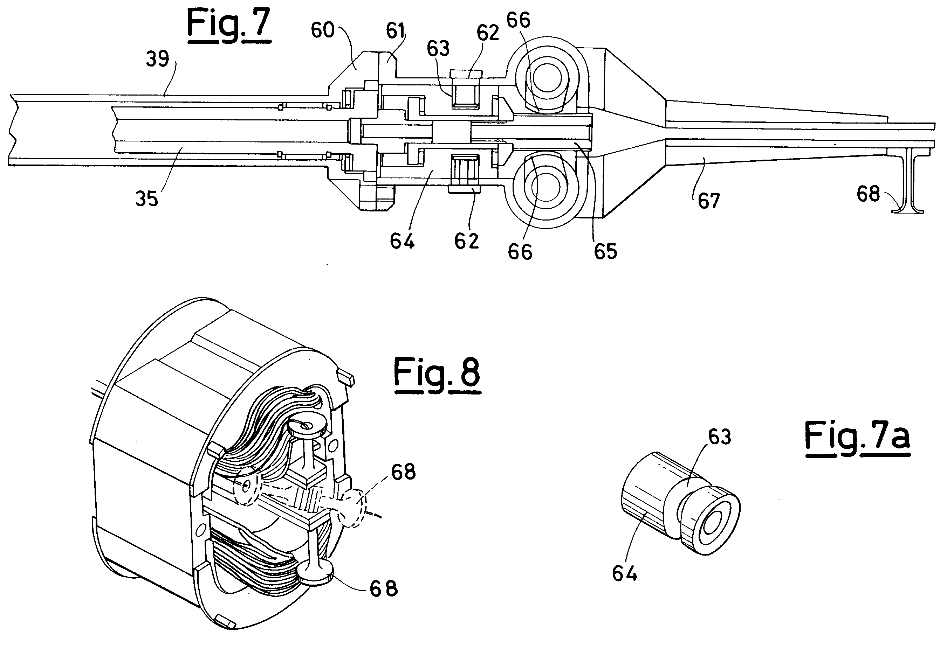

In the solution illustrated in figures 7, 7a and 8 the needles describe an ellipse path by stradling and rotating at the front and back outlets of the stator as described and claimed in patent application No. 21485-A/85 of 9th July 1985 mentioned above.

In order to obtain this movement of the needles, jacket 61 is applied to flange 60. The jacket holds two opposed pins 62 integrally and neutrally engaged in a circular slot of an internal sleeve 64.

The sleeve 64 can slide to translate in jacket 61 this movement is realized due to the fact that the sides 63 of its slot (Fig. 7a) have an arched shape and do not lie in a perpendicular plane to the axis of the needles so that when the jacket 61 rotates, driven by the shaft 39 to which it is integral, the pins 62 rotate in the two opposite directions, depending on the direction of translation of the sleeve 64, as they slide on the cam track realized by slot 63.

The front end of the sleeve 64 holds integral a rack which meshes with sector gears 66 integral with the needle holder 67.

The sliding of the sleeve 64 and of its rack 65 then determines the rotation respectively in the opening and closing of the needles 68 (see Fig. 8).

Translation by the sleeve 64 is in time with the reciprocating traverse motion of the winding shaft so the path of the needles 68 will result as ovoid-shaped external to the stator, having the advantage that, when calculating different shapes of cams 63 on the sleeve 64 it will be possible to find the optimum path of the wire in order to obtain better coils.

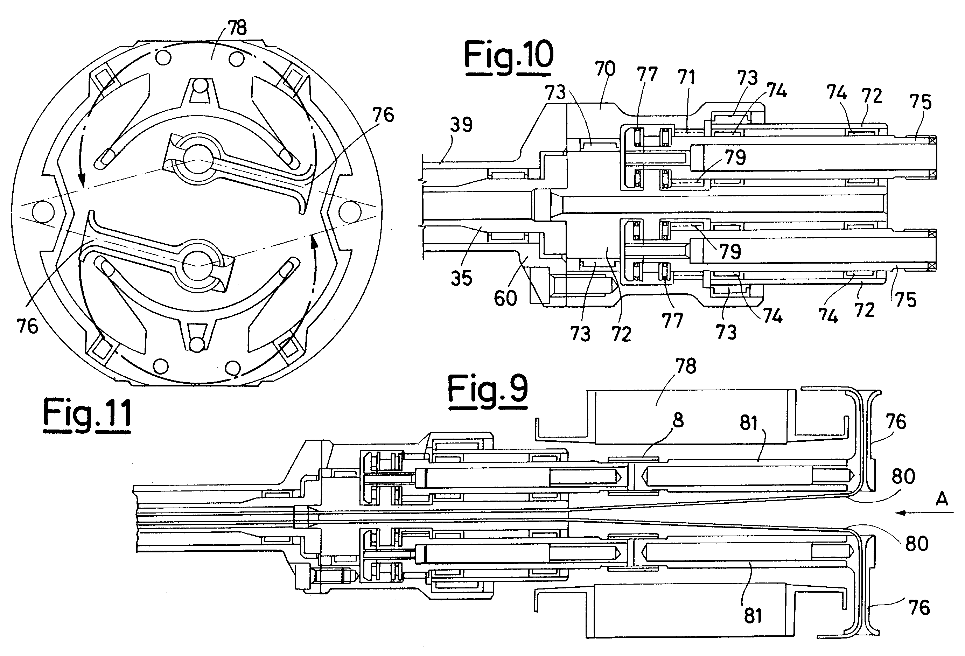

In the second solution illustrated in Figures 9, 10 and 11 the needles are eccentric with respect to the axis of the winding shaft 35 and thus of the stator and at the outlets of the same stator they execute arcs of circle (Fig. 11) while they wind the cable as described and claimed in the patent application No. 20184-A/85 of 2nd April 1955 mentioned above.

An external jacket 70 is connected to flange 60 having internal toothing 71. Integral to winding shaft 35, a shaft 72 is assembled on bearings 73 in the inside of the jacket 70, in this way jacket 70 can rotate on shaft 72.

Into the seats of shaft 72, and assembled on bearings 74, are two tubes 75 for coupling of the needles 76. Front bearings 77 assembled between the internal ends of the tubes 75 and projections of the internal shaft 72 allow for discharge of stretching and stresses that take place on needles 76 at the end of respective winding strokes at the outlet of the stator 78.

The tubes 75 are then geared in 79 so as to engage in the toothings 71 of the external jacket and to be driven in rotation by the latter.

The two needles 76 carrying the respective winding wires 80 are assembled integral to coupling tubes 81 and are locked at the end of tubes 75 by threaded coupling sleeves 8.

By utilizing the above described machine contained in the casing 10 it is possible to effect an automatic adjustment of the stroke of the winding shaft 35 and a manual adjustment of the oscillation amplitude of the tube 39 and thus of the winding needles 68 or 76.

The automatic adjustment of the stroke of the winding shaft 35 may be programmed by the microprocessor which controls the motor 11.

The value of the stroke to be accomplished can be set on the video of the machine, that is a command is given for a preset stroke relating to the length of the stator on which the winding must be made.

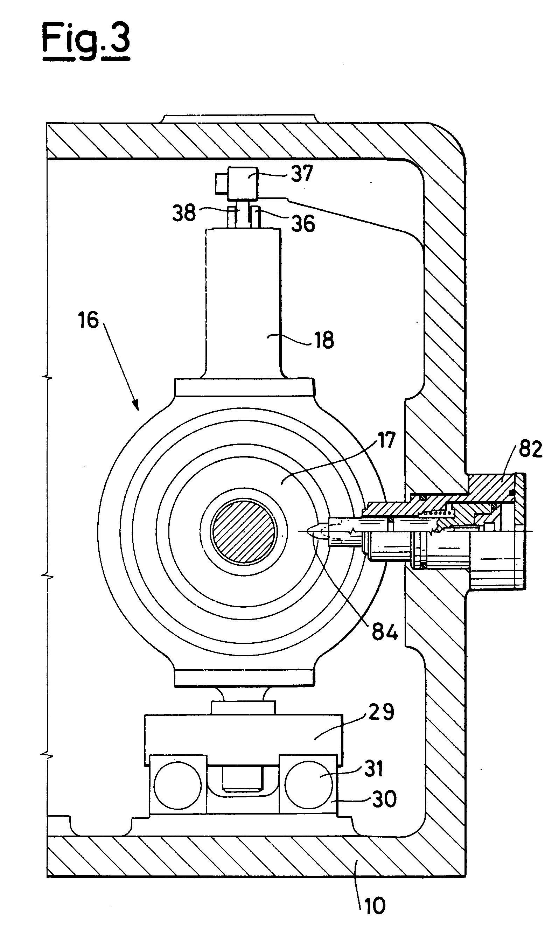

The microprocessor starts, by controlling a pneumatic unit 82 (Fig. 3 and 4), to carry out the movement of a pin 84 which engage in the notch 28 (Fig. 1) machined in the flange 27. This engagement avoids the rotation of the coupling sleeve 25; the motor 11 starts to rotate at such a speed as it has been programmed by the software regarding adjustments. Its position is controlled by the encoder 15 placed on the main shaft 12 on the opposite side of the motor.

Therefore, when the motor brings in rotation the disk 17 the sleeve 24 will also rotate through the connecting rod 22.

As the coupling sleeve 25 is locked by the above mentioned engagement, the sleeve 24 will slide longitudinally due to the thread in its interior and on the coupling sleeve 25 until it brings the frame 18 to the maximum backward inclination toward the motor.

The winding shaft 35 will have thus run all the possible backward stroke until when it will enter into the operating field of a microsensor 83, which will communicate for the encoder that from that moment on when the encoder will find a reference notch the adjustment will find itself in 0 condition, and therefore the adjustment will have been reset.

From this moment on the motor 11 may reverse the rotation direction and return to a condition of a new stroke set on the video for a new stator to be wound, so the encoder 15 will start the count of the notches until it will stop on the one which refers to the programmed stroke.

The notches of the encoder are connected to the stroke by a data table placed in the microprocessor. Such data indicates, by trigonometric calculations carried out previously, the correlation between the notches of the encoder 15 and the stroke of the winding shaft 35, because as can be seen in the drawings, the movement of the shaft 35 results amplified by the oscillating disk with respect to the movement of the sleeve 24.

The manual adjustment of the oscillation amplitude of the tube 39 takes place by acting on the screw 59 after loosening the nut 57 (Fig. 1, 5 and 6). In this way the slotted link moves upward or downward depending on the direction of the rotation of the screw, thus changing the oscillation angle of the sector 44 which leads to the oscillation variation of the tube 39 by means of the sleeve 40.

## Claims

1. A machine for the actuation of needles for the realization of electric motor field windings comprising a casing (10) and needles (68, 76) which accomplish longitudinal reciprocatory motion and oscillatory motion for delivering wire to form the coils; characterised in that it further comprises:
- a shaft (35) having a longitudinal axis and being mounted for longitudinal reciprocation relative to said casing (10) parallel to said longitudinal axis;
- a tube (39) mounted for longitudinal reciprocation with said shaft (35);
- reciprocating means (16, 17, 18) for causing the shaft (35) and the tube (39) to reciprocate longitudinally
- oscillating means (41, 44, 51, 53, 54) for obtaining rotational oscillation between the shaft (35) and the tube (39);
- connecting means (61-66, 70, 75) for connecting first and second needles (68, 76) to the tube (39) and the shaft (35) and for causing the first and second needles (68, 76) to reciprocate longitudinally in response to the longitudinal reciprocation of the shaft (35) and to move relative to one another in response to the rotational oscillation between the tube (39) and the shaft (35).

2. The machine defined in claim 1 wherein the reciprocating means (16, 17, 18) for causing the shaft (35) and the tube (39) to reciprocate comprises:
- a main shaft (12) driven for rotational motion by motor means (11);
- a disk (17) pivoted perpendicularly to the main shaft (12) so that the disk (17) can rotate together with the main shaft (12);
- means (22-24) for maintaining the disk (17) at a desired inclination relative to the main shaft (12);
- means (18, 32, 34) for connecting the disk (17) to the shaft (35) so that rotation of the disk (17) together with the main shaft (12) can be converted to cause the shaft (35) and the tube (39) to reciprocate.

3. The machine defined in claim 2 wherein the means (18, 32, 34) for connecting the disk (17) to the shaft (35) comprises:
- frame means (18) having a seat for receiving and allowing rotation of the disk (17) with the main shaft (12) so that the frame means (18) can be caused to move by rotation of the disk (17) with the main shaft (12).
- cursor means (32) slideably mounted on the frame means (18) and pivot means (34) for connecting the cursor means (32) to the shaft (35) so that rotation of the disk (17) together with the main shaft (12) can be converted into reciprocation of the shaft (35) and the tube (39).

4. The machine defined in claim 2 wherein the means (22-24) for maintaining the disk (17) at a desired inclination in relation to the main shaft (12) comprises:
linkage means (22), for connecting the disks (17) to a sleeve (24) assembled to rotate together with the main shaft (12) during reciprocation of the shaft (35) and the tube (39).

5. The machine defined in claim 1 wherein the means (41, 44, 51, 53, 54) for obtaining rotational oscillation between the shaft (35) and the tube (39) comprises:
- a gear (41) coupled to the tube (39) and engaged with a sector gear (44)
cam means (53, 54) mounted for rotation with the main shaft (12);
- crank means (51) mounted to oscillate relative to the casing (10) by sliding of the ends of the crank means on the cam means (53, 54) during rotation of the main shaft (12);
- means (46) for supporting the sector gear (44) in relation to the casing (10) and for connecting the sector gear (44) to the crank means (51) so that oscillation of the crank means (51) during rotation of the main shaft (12) can be imparted to the tube (39) by engagement of the sector gear (44) with the gear (41) coupled to the tube (39).

6. The machine defined in claim 1 wherein said shaft (35) is substantially concentric with said longitudinal axis, and wherein said tube (39) is concentrically mounted on said shaft (35).

7. The machine defined in claim 1 wherein said first and second needles (76) are laterally spaced from one another on respective opposite sides of a central axis which is substantially parallel to the lenght of said first and second needles (76), and wherein said connecting means (70, 71, 79), comprises:
means responsive to said rotational oscillation of said tube (39) for causing each of said first and second needles (76) to oscillate rotationally about first and second oscillation axes, respectively, said first and second oscillation axes being substantially parallel to said central axis and laterally spaced from one another on respective opposite sides of said central axis.

8. The machine defined in claim 7 wherein said first needle (76) is substantially concentric with said first oscillation axis, and wherein said second needle (76) is substantially concentric with said second oscillation axis.

9. The machine defined in claim 8 wherein said connecting means (70, 71,79) further comprises:
driving gear means mounted on one of said shaft (35) and tube (39);
means for mounting each of said first and second needles (76) on the end of said shaft (35) and tube (39) for rotation about the associated oscillation axis; and
driven gear means mounted on each of said first and second needles (76) and meshing with said driving gear means so that relative rotation of said shaft (35) and tube (39) causes each of said first and second needles (76) to rotate about the associated oscillation axis.

10. The machine defined in claim 1 further comprising:
means (83) for adjusting the stroke of at least one of said longitudinal reciprocation and said rotational oscillation.

11. The machine defined in claim 10 wherein said means (83) for adjusting the stroke comprises:
first means for adjusting the stroke of said longitudinal reciprocation; and
second means for adjusting the stroke of said rotational oscillation.

12. A method of actuating the needles used to wind electric motor field coils comprising the steps of:
reciprocating a shaft (35) and a tube (39) parallel to a longitudinal axis;
causing said tube (39) to rotationally oscillate relative to said shaft (35) about said longitudinal axis in synchronism with the reciprocation of said shaft (35) and said tube (39); and
coupling said shaft (35) and said tube (39) to first and second needles (68, 76) so that said first and second needles (68, 76) reciprocate in response to said reciprocation of said shaft (35) and said tube (39), and so that said first and second needles (68, 76) move relative to one another in response to the rotational oscillation of said tube (39), member.

13. The method defined in claim 12 wherein said first and second needles (76) are laterally spaced from one another on respective opposite sides of a central axis which is substantially parallel to the length of said first and second needles (76), and wherein said step of coupling said shaft (35) and said tube (39) to first and second needles (76) comprises the step of:
responding to said rotational oscillation of said tube (39) by rotationally oscillating each of said first and second needles (76) about first and second oscillation axes, respectively, said first and second oscillation axes being substantially parallel to said central axis and laterally spaced from one another on respective opposite sides of said central axis.

14. The method defined in claim 12 wherein said electric motor field coils may be of different dimensions, and wherein said method further comprises the step of:
adjusting the stroke of at least one of said longitudinal reciprocation and said rotational oscillation in accordance with the dimensions of the field coils to be wound.

## Patentansprüche

1. Vorrichtung zur Betätigung von Nadeln für die Ausbildung der Feldwicklungen eines Elektromotors, umfassend ein Gehäuse und Nadeln, welche eine Hin- und Herbewegung in Längsrichtung und eine oszillierende Bewegung für die Zufuhr von Draht zur Ausbildung der Spulen ausführt, dadurch gekennzeichnet, dass sie ferner aufweist:
- eine Welle (35) mit einer Längsachse, die in Längsrichtung gegenüber dem Gehäuse (10) parallel zu der Längsachse hin- und herbeweglich gelagert ist;
- ein Rohr (39), welches zusammen mit der Welle (35) in Längsrichtung hin- und herbeweglich gelagert ist:
- hin- und hergehende Mittel (16, 17, 18) zum Antrieb der Welle (35) und des Rohres (39) zu einer hin- und hergehenden Bewegung;
- oszillierende Mittel (41, 44, 51, 53, 54) zur Erzeugung einer rotierenden Oszillationsbewegung zwischen Welle (35) und Rohr (39);
- Verbindungsmittel (61-66, 70, 75) zum Befestigen von ersten und zweiten Nadeln (68, 76) am Rohr (39) und an der Welle (39) sowie zum Bewirken, dass die ersten und zweiten Nadeln (68, 76) in Abhängigkeit der längsgerichteten Hin- und Herbewegung der Welle (35) eine längsgerichtete Hin- und Herbewegung und in Abhängigkeit von der rotierenden Oszillationsbewegung zwischen Welle (35) und Rohr (39) eine gegenseitige Relativbewegung ausführen.

2. Vorrichtung nach Anspruch 1, bei welcher die hin- und hergehenden Mittel (16, 17, 18) zum Antrieb der Welle (35) und des Rohres (39) zu einer hin- und hergehenden Bewegung
- eine Hauptwelle (12), die durch einen Motor (11) zu einer Drehbewegung angetrieben ist,
- eine Scheibe (17), die gegenüber der Senkrechten zur Hauptwelle (12) verschwenkt ist, so dass die Scheibe (17) zusammen mit der Hauptwelle (12) rotieren kann,
- Mittel (22-24) zur Aufrechterhaltung der gegenüber der Hauptwelle (12) in gewünschter Weise geneigten Lage der Scheibe (17),
- und Mittel (18, 32, 34) zur Befestigung der Scheibe (17) an der Welle (35)
aufweisen, derart, dass eine Rotation der Scheibe (17) zusammen mit der Hauptwelle (12) so umgewandelt wird, dass eine Hin- und Herbewegung der Welle (35) und des Rohres (39) bewirkt wird.

3. Vorrichtung nach Anspruch 2, bei welcher die Mittel (18, 32, 34) zur Befestigung der Scheibe (17) an der Welle (35)
- ein Rahmenelement (18) mit einem Sitz zur drehbaren Aufnahme der Scheibe (17) mit der Hauptwelle (12) derart, dass das Rahmenelement (18) durch Rotation der Scheibe (17) mit der Hauptwelle (12) zu einer Verschiebung angetrieben werden kann, und
- einen verschiebbar am Rahmenelement (18) gelagerten Schieber (32) sowie einen Drehzapfen (34) zur Befestigung des Schiebers (32) an der Welle (35)
aufweisen, so dass eine Rotation der Scheibe (17) zusammen mit der Hauptwelle (12) in eine Hin- und Herbewegung der Welle (35) und des Rohres (39) umgewandelt werden kann.

4. Vorrichtung nach Anspruch 2, bei welcher die Mittel (22-24) zur Aufrechterhaltung der gegenüber der Hauptwelle (12) in gewünschter Weise geneigten Lage der Scheibe (17) ein Gestänge (22) zur Verbindung der Scheibe (17) mit einer Hülse (24) aufweisen, welche so angeordnet ist, dass sie während einer Hin- und Herbewegung der Welle (35) und des Rohres (39) zusammen mit der Hauptwelle (12) rotiert.

5. Vorrichtung nach Anspruch 1, bei welcher die Mittel (41, 44, 51, 53, 54) zur Erzeugung einer rotierenden Oszillationsbewegung zwischen Welle (35) und Rohr (39)
- ein mit dem Rohr (39) gekoppeltes und in einen Zahnradsektor (44) eingreifendes Zahnrad (41),
- zusammen mit der Hauptwelle (12) rotierende Nockenelemente (53, 54),
- ein Kurbelelement (51), das zu einer oszillierenden Bewegung relativ zum Gehäuse befähigt ist, indem die Enden des Kurbelelements während der Rotation der Hauptwelle (12) auf den Nockenelementen (53, 54) gleiten, und
- Mittel (46) zum Abstützen des Zahnradsektors (44) gegenüber dem Gehäuse (10) sowie zum Verbinden des Zahnradsektors (44) mit dem Kurbelelement (51)
aufweisen, so dass eine oszillierende Bewegung des Kurbelelements (51) während der Rotation der Hauptwelle (12) an das Rohr (39) weitergegeben werden kann, indem der Zahnradsektor (44) mit dem mit dem Rohr (39) gekoppelten Zahnrad (44) in Eingriff steht.

6. Vorrichtung nach Anspruch 1, bei welcher die genannte Welle (35) im wesentlichen konzentrisch zur genannten Längsachse ist, und bei welcher das genannte Rohr (39) konzentrisch auf der genannten Welle (35) angebracht ist.

7. Vorrichtung nach Anspruch 1, bei welcher die ersten und zweiten Nadeln (76) in gegenseitigem seitlichem Abstand voneinander auf gegenüberliegenden Seiten einer zentralen Achse angeordnet sind, welche Achse im wesentlichen parallel zur Längserstreckung der genannten ersten und zweiten Nadeln (76) verläuft, und bei welcher die genannten Verbindungsmittel (70, 71, 79) Mittel aufweisen , welche auf die rotierende Oszillationsbewegung des genannten Rohres (39) ansprechen, um zu bewirken, dass die ersten und zweiten Nadeln (76) um erste bzw. zweite Oszillationsachsen herum eine rotierende Oszillationsbewegung ausführen, wobei die genannten ersten und zweiten Oszillationsachsen im wesentlichen parallel zur genannten zentralen Achse und in gegenseitigem seitlichen Abstand voneinander auf gegenüberliegenden Seiten der genannten zentralen Achse verlaufen.

8. Vorrichtung nach Anspruch 7, bei welcher die genannte erste Nadel (76) im wesentlichen konzentrisch zur genannten ersten Oszillationsachse verläuft, und bei welcher die genannte zweite Nadel (76) im wesentlichen konzentrisch zur genannten zweiten Oszillationsachse verläuft.

9. Vorrichtung nach Anspruch 8, bei welcher die genannten Verbindungsmittel (70, 71, 79) ferner
- auf der genannten Welle (35) oder dem genannten Rohr (39) angeordnete Antriebszahnrad-Elemente,
- Mittel zur drehbaren Befestigung jeder der genannten ersten und zweiten Nadeln (76) am Ende der genannten Welle (35) und des genannten Rohres (39), wobei die Drehung um die zugeordnete Oszillationsachse erfolgt, und
- auf jeder der genannten ersten und zweiten Nadeln angeordnete, mit den genannten Antriebszahnrad-Elementen kämmende, angetriebene Zahnradelemente
aufweisen, so dass eine relative Rotation der Welle (35) und des Rohres (39) bewirkt, dass jede der genannten ersten und zweiten Nadeln (76) um die zugeordnete Oszillationsachse rotiert.

10. Vorrichtung nach Anspruch 1, welche ferner Mittel (83) zur Einstellung des Hubs wenigstens der genannten, längsgerichteten Hin- und Herbewegung oder wenigstens der genannten rotierenden Oszillationsbewegung aufweist.

11. Vorrichtung nach Anspruch 10, bei welcher die Mittel (83) zur Einstellung des Hubs
- erste Mittel zur Einstellung des Hubs der genannten, längsgerichteten Hin- und Herbewegung, und
- zweite Mittel zur Einstellung der genannten rotierenden Oszillationsbewegung
aufweisen.

12. Verfahren zur Betätigung der zur Ausbildung der Feldspulen eines Elektromotors verwendeten Nadeln, umfassend folgende Verfahrensschritte:
- Hin- und Herbewgen einer Welle (35) und eines Rohres (39) parallel zu einer Längsachse;
- Antreiben des genannten Rohres (39) zu einer rotierenden Oszillationsbewegung gegenüber der genannten Welle (35) um die genannten Längsachse in Synchronisation mit der Hin- und Herbewegung der genannten Welle (35) und des genannten Rohres (39); und
- Koppeln der genannten Welle (35) und des genannten Rohres (39) mit ersten und zweiten Nadeln (68, 76), so dass die genannten ersten und zweiten Nadeln (68, 76) unter Einfluss der Hin- und Herbewegung der genannten Welle (35) und des genannten Rohres (39) eine Hin- und Herbewegung ausführen, und so dass die genannten ersten und zweiten Nadeln (68, 76) sich unter Einfluss der rotierenden Oszillationsbewegung des genannten Rohres (39) relativ zueinander bewegen.

13. Verfahren nach Anspruch 12, bei welchem die genannten ersten und zweiten Nadeln (76) in gegenseitigem seitlichen Abstand voneinander auf einander gegenüberliegenden Seiten einer im wesentlichen parallel zur Längserstreckung der genannten ersten und zweiten Nadeln verlaufenden zentralen Achse angeordnet sind, und bei welchem der Verfahrensschritt des Koppelns der genannten Welle (35) und des genannten Rohres (39) mit den ersten und zweiten Nadeln (68, 76) folgenden Schritt umfasst:
- Reagieren auf die genannte rotierende Oszillationsbewegung des genannten Rohres (39) durch rotierendes Oszillieren jeder der genannten ersten und zweiten Nadel (76) um eine erste bzw. eine zweite Oszillationsachse, wobei die genannten ersten und zweiten Oszillationsachsen im wesentlichen parallel zu der genannten zentralen Achse und in gegenseitigem Abstand voneinander auf einander gegenüberliegenden Seiten der genannten zentralen Achse verlaufen.

14. Verfahren nach Anspruch 12, bei welchem die genannten Elektromotor-Feldspulen abweichende Dimensionen besitzen können, wobei das Verfahren ferner den nachfolgenden Verfahrensschritt umfasst:
- Einstellen des Hubs mindestens der längsgerichteten Hin- und Herbewegung oder mindestens der rotierenden Oszillationsbewegung in Übereinstimmung mit den Dimensionen der zu wickelnden Feldspulen.

## Revendications

1. Une machine d'actionnement de tubes de guidage pour la réalisation de bobinages de champ de moteurs électriques, comprenant un boîtier et des tubes de guidage qui accomplissent un mouvement longitudinal de va-et-vient et un mouvement oscillatoire pour délivrer du fil en vue de former les enroulements ;
caractérisée en ce qu'elle comprend en outre :
- un arbre (35) présentant un axe longitudinal et monté en vue d'un déplacement longitudinal en va-et-vient parallèle audit axe longitudinal par rapport audit boîtier (10);
- un tube (39) monté en vue d'un déplacement longitudinal en va-et-vient avec ledit arbre (35);
- un moyen de déplacement en va-et-vient (16, 17, 18) prévu pour amener l'arbre (35) et le tube (39) à se déplacer longitudinalement en va-et-vient ;
- un moyen d'oscillation (41, 44, 51, 53, 54) prévu pour obtenir une oscillation à rotation entre l'arbre (35) et le tube (39);
- un moyen de raccordement (61 à 66, 70, 75) pour raccorder des premier et deuxième tubes de guidage (68, 76) au tube (39) et à l'arbre (35) et pour amener ces premier et deuxième tubes de guidage (68, 76) à se déplacer longitudinalement en va-et-vient en réponse au déplacement longitudinal en va-et-vient de l'arbre (35) et à se déplacer l'un par rapport à l'autre en réponse à l'oscillation à rotation entre le tube (39) et l'arbre (35).

2. La machine selon la revendication 1, dans laquelle le moyen de déplacement en va-et-vient (16, 17, 18) prévu pour amener l'arbre (35) et le tube (39) à se déplacer en va-et-vient comprend :
- un arbre principal (12) entraîné en mouvement de rotation par un moyen de moteur (11);
- un disque (17) qui pivote perpendiculairement à l'arbre principal (12) d'une manière telle que ce disque (17) puisse tourner de façon solidaire avec l'arbre principal (12);
- un moyen de maintien (22 à 24) du disque (17) selon une inclinaison souhaitée par rapport à l'arbre principal (12);
- un moyen (18, 32, 34) pour raccorder le disque (17) à l'arbre (35) d'une manière telle que la rotation du disque (17) avec l'arbre principal (12) puisse être convertie de manière à amener l'arbre (35) et le tube (39) à se déplacer en va-et-vient.

3. La machine selon la revendication 2, dans laquelle le moyen de raccordement (18,32, 34) du disque (17) à l'arbre (35) comprend :
- un moyen de cadre (18) pourvu d'un siège pour recevoir le disque (17) et permettre sa rotation avec l'arbre principal (12) d'une manière telle que le moyen de cadre (18) puisse être amené à se déplacer par une rotation du disque (17) avec l'arbre principal (12).
- un moyen de curseur (32) monté à coulissement sur le moyen de cadre (18), et un moyen de pivot (34) pour raccorder le moyen de curseur (32) à l'arbre (35) d'une manière telle que la rotation solidaire du disque (17) avec l'arbre principal (12) puisse être convertie en un déplacement en va-et-vient de l'arbre (35) et du tube (39).

4. La machine selon la revendication 2, dans laquelle le moyen de maintien (22 à 24) du disque (17) selon une inclinaison souhaitée par rapport à l'arbre principal (12) comprend :
un moyen de liaison (22), pour raccorder le disque (17) à un manchon (24) assemblé de manière à tourner de façon solidaire avec l'arbre principal (12) pendant un déplacement en va-et-vient de l'arbre (35) et du tube (39).

5. La machine selon la revendication 1, dans laquelle le moyen d'obtention (41, 44, 51, 53, 54) d'une oscillation à rotation entre l'arbre (35) et le tube (39) comprend :
- un engrenage (41) accouplé au tube (39) et en prise avec un engrenage sectoriel (44) ;
- un moyen de came (53, 54) monté de manière à tourner avec l'arbre principal (12);
- un moyen de manivelle (51) monté de manière à osciller par rapport au boîtier (10) par coulissement des extrémités du moyen de manivelle sur le moyen de came (53, 54) pendant la rotation de l'arbre principal (12);
- un moyen (46) de support de l'engrenage sectoriel (44), par rapport au boitier (10), et de raccordement de l'engrenage sectoriel (44) au moyen de manivelle (51), d'une manière telle que l'oscillation du moyen de manivelle (51) pendant la rotation de l'arbre (12) puisse être communiquée au tube (39) par une mise en prise de l'engrenage sectoriel (44) avec l'engrenage (41) accouplé au tube (39).

6. La machine selon la revendication 1, dans laquelle ledit arbre (35) est sensiblement concentrique audit axe longitudinal, et dans lequel ledit tube (39) est monté de façon concentrique sur ledit arbre (35).

7. La machine selon la revendication 1, dans laquelle lesdits premier et deuxième tubes de guidage (76) sont espacés latéralement l'un de l'autre sur des côtés respectifs opposés d'un axe central qui est sensiblement parallèle à la longueur desdits premier et deuxième tubes de guidage (76), et dans laquelle ledit moyen de raccordement (70, 71, 79) comprend :
un moyen sensible à ladite oscillation à rotation dudit tube (39) pour amener chacun desdits premier et deuxième tubes de guidage (76) à osciller à rotation autour d'un premier et d'un deuxième axes d'oscillation, respectivement, lesdits premier et deuxième axes d'oscillation étant sensiblement parallèles audit axe central et étant espacés latéralement l'un de l'autre sur des côtés opposés respectifs dudit axe central.

8. La machine selon la revendication 7, dans laquelle ledit premier tube de guidage (76) est sensiblement concentrique audit premier axe d'oscillation, et dans laquelle ledit deuxième tube de guidage (76) est sensiblement concentrique audit deuxième axe d'oscillation.

9. La machine selon la revendication 8, dans laquelle ledit moyen de raccordement (70, 71, 79) comprend en outre :
- des moyens d'engrenages menants montés sur l'un ou l'autre des deux éléments : l'arbre (35) et le tube (39);
- un moyen de montage de chacun desdits premier et deuxième tubes de guidage (76) sur l'extrémité dudit arbre (35) et du tube (39) pour tourner autour de l'axe d'oscillation associé; et
- des moyens d'engrenages menés sur chacun desdits premier et deuxième tubes de guidage (76) et engrenant avec lesdits moyens d'engrenages menants d'une manière telle qu'une rotation relative dudit arbre (35) et dudit tube (39) amène chacun desdits premier et deuxième tubes de guidage (76) à tourner autour de l'axe d'oscillation associé.

10. La machine selon la revendication 1, comprenant en outre :
des moyens d'ajustement (83) de la course d'au moins l'un des déplacements parmi ledit déplacement longitudinal en va-et-vient et ladite oscillation à rotation.

11. La machine selon la revendication 10, dans laquelle lesdits moyens d'ajustement (83) de la course comprennent :
- un premier moyen d'ajustement de la course dudit déplacement longitudinal en va-et-vient; et
- un deuxième moyen d'ajustement de la course de ladite oscillation à rotation.

12. Un procédé d'actionnement des tubes de guidage utilisés pour bobiner des bobines de champ d'un moteur électrique, comprenant les étapes consistant à :
- déplacer en va-et-vient un arbre (35) et un tube (39) parallèlement à un axe longitudinal;
- amener ledit tube (39) à osciller à rotation par rapport audit arbre (35) autour dudit axe longitudinal en synchronisme avec le déplacement en va-et-vient dudit arbre (35) et dudit tube (39); et
- accoupler ledit arbre (35) et ledit tube (39) à un premier et un deuxième tubes de guidage (68, 76) d'une manière telle que lesdits premier et deuxième tubes de guidage (68, 76) se déplacent en va-et-vient en réponse audit déplacement en va-et-vient dudit arbre (35) et dudit tube (39), d'une manière telle que lesdits premier et deuxième tubes de guidage (68, 76) se déplacent l'un par rapport à l'autre en réponse à l'oscillation à rotation dudit tube (39).

13. Le procédé selon la revendication 12, dans lequel lesdits premier et deuxième tubes de guidage (76) sont espacés latéralement l'un de l'autre sur des côtés opposés respectifs d'un axe central qui est sensiblement parallèle à la longueur dudit premier et dudit deuxième tubes de guidage (76), et dans lequel ladite étape d'accouplement dudit arbre (35) et dudit tube (39) au premier et au deuxième tubes de guidage (76) comprend l'étape consistant à :
répondre à ladite oscillation à rotation dudit tube (39) en faisant osciller à rotation chacun desdits premier et deuxième tubes de guidage (76) autour d'un premier et d'un deuxième axes d'oscillation, respectivement, ledit premier et ledit deuxième axes d'oscillation étant sensiblement parallèles audit axe central, et étant espacés latéralement l'un de l'autre sur des côtés opposés respectifs dudit axe central.

14. Le procédé selon la revendication 12, dans lequel lesdites bobines de champ du moteur électrique peuvent être de dimensions différentes, et dans lequel ledit procédé comprend en outre l'étape consistant à :
ajuster, en fonction des dimensions des bobines de champ à bobiner, la course d'au moins l'un des déplacements parmi ledit déplacement longitudinal en va-et-vient et ladite oscillation à rotation.
